# FASCICULE DE BREVET EUROPEEN

(11) **EP 2 263 359 B1**
(45) Date de publication et mention de la délivrance du brevet: **03.09.2014**
(21) Numéro de dépôt: 09730101.4
(22) Date de dépôt: 30.03.2009
(51) Int. Cl.: H04L 29/06, H04L 12/22

(54) **PROCÉDÉ D'ACCÈS ET DE TRANSFERT DE DONNÉES LIÉES À UNE APPLICATION INSTALLÉE SUR UN MODULE DE SÉCURITÉ ASSOCIÉ À UN TERMINAL MOBILE, MODULE DE SÉCURITÉ, SERVEUR DE GESTION ET SYSTÈME ASSOCIÉS**
VERFAHREN DES ZUGANGES UND DES ÜBERTRAGENS DER DATEN BEZOGEN ZUR ANMELDUNG INSTALLIERT AUF EINEM SICHERHEITSMODUL VERBUNDEN MIT EINEM MOBILEN ENDGERÄT, VERBUNDENES SICHERHEITSMODUL, VERWALTUNGS-SERVER UND SYSTEM
METHOD OF ACCESS AND OF TRANSFERRING DATA RELATED TO AN APPLICATION INSTALLED ON A SECURITY MODULE ASSOCIATED WITH A MOBILE TERMINAL, ASSOCIATED SECURITY MODULE, MANAGEMENT SERVER AND SYSTEM

(30) Priorité: 31.03.2008 FR 0852110
(43) Date de publication de la demande: 22.12.2010
(73) Titulaire: Orange, 75015 Paris (FR)
(72) Inventeur: RAFFARD, Rémi, F-75010 Paris (FR); ASSADI, Houssem, F-14000 Caen (FR)
(86) Numéro de dépôt international: PCT/FR2009/050522
(87) Numéro de publication internationale: WO 2009/125141

(56) Documents cités:
- EP-A- 1 370 084
- WO-A-01/08111
- WO-A-2005/022366
- US-A1- 2004 210 715

## Description

La présente invention se rapporte au domaine des télécommunications, et plus particulièrement à celui de la sécurité des applications hébergées sur un élément sécurisé d'un terminal mobile.

La plupart des terminaux mobiles existants permettent, non seulement d'établir des communications téléphoniques, mais également d'exécuter un certain nombre d'applications téléchargées dans un module de sécurité lié au terminal. Ce module de sécurité peut être un module mémoire du terminal ou un support amovible (par exemple une carte à puce d'abonné) inséré dans le terminal.

Le téléchargement de ces applications est réalisé par une connexion classique du terminal mobile avec un serveur de gestion.

Une telle application comprend d'une part, une partie programme qui s'exécute lors de la réception d'un ordre de sélection de l'application en provenance d'un équipement externe, par exemple une borne sans contact, et d'autre part, une zone de données applicatives.

Ces données applicatives sont générées par un fournisseur de services, par exemple, une banque pour une application de paiement, et transmises via un canal sécurisé à un serveur de gestion. Suite à la réception de ces données, le serveur de gestion commande le téléchargement de ces données dans le module de sécurité, en utilisant un jeu de clés partagées entre lui et ce module.

Au cours de la vie de l'application, une partie de ces données peut être mise à jour par l'application elle-même.

Il n'existe aucun moyen pour un équipement tel qu'un serveur de gestion, de récupérer ces données modifiées dans le but de les transférer vers un autre module de sécurité ou de les sauvegarder lors d'une mise à jour de l'application.

Ainsi, lors d'un changement de module de sécurité, par exemple un changement de carte SIM suite à un changement d'opérateur, l'utilisateur doit s'adresser au serveur de gestion gérant l'application qui s'adresse de nouveau au fournisseur de services de l'application pour obtenir les données applicatives.

Avec l'accroissement du nombre de terminaux mobiles, les changements de modules de sécurité sont plus nombreux, et ce processus devient difficile à gérer.

De plus, les données applicatives téléchargées sont les données initiales et non les données mises à jour au cours de la vie de l'application. La demande internationale de brevet WO 01/0811 A1 décrit un système comprenant une carte pour le stockage sécurisé des applications et leurs données. La carte comprend différentes zones mémoire pour l'accès sécurisé.

La société SICAP (marque déposée) propose un produit permettant de mettre à jour la configuration d'une carte SIM (pour "Subscriber Identity Module"). Cette mise à jour consiste, pour un serveur distant, à lire les données de configuration dans une carte SIM insérée dans un terminal mobile puis à les réinscrire dans une autre carte SIM. Les données ainsi transférées sont des données non sensibles, c'est-à-dire non confidentielles et en conséquence non protégées en lecture. Pour lire de telles données, le serveur transmet un ordre de lecture conforme à la norme ISO 7816-4. Ce produit ne permet pas de lire des informations confidentielles et donc ne permet pas de copier les données applicatives confidentielles d'une application installée sur une carte SIM.

Par ailleurs, lors d'une mise à jour de l'application, par exemple un changement de version du programme de l'application, la zone de données applicatives est réinitialisée avec les données transmises de nouveau par le fournisseur de services lié à l'application.

Il existe donc un besoin de pouvoir récupérer de façon sécurisée la zone de données applicatives et confidentielles d'une application dans le but de la transférer vers un autre module de sécurité ou de la réinstaller lors d'une mise à jour de l'application, sans faire appel à un fournisseur de services.

A cet effet la présente invention propose un procédé de gestion de données selon la revendication 1.

Ainsi, les données applicatives d'une application installée sur un module de sécurité peuvent être récupérées par un serveur de gestion après authentification de celui-ci par le module de sécurité. Les données récupérées par le serveur peuvent ensuite être transférées vers un autre module de sécurité, sans nécessiter d'accès au fournisseur de services de l'application.

Les données applicatives de l'application peuvent également être stockées temporairement dans une zone mémoire de module de sécurité pour permettre une mise à jour de l'application. Elles pourront ainsi être réinstallées suite à cette mise à jour. Ainsi, la mise à jour d'une application ne nécessite plus d'accéder au serveur du fournisseur de services.

Selon une caractéristique particulière du procédé de l'invention, la demande d'accès comporte un ordre d'action et le procédé comporte une étape d'exécution de ladite action après l'étape de transmission ou de stockage.

Ainsi, l'ordre d'action permet de préciser la demande d'accès en indiquant les actions complémentaires à réaliser par le module de sécurité lors d'une demande d'accès.

Selon un mode de réalisation particulier de l'invention, l'action est un blocage de ladite application et/ou un effacement de données de ladite application. Le blocage ou l'effacement de données de l'application évitent qu'une même instance de l'application soit dupliquée dans plusieurs modules de sécurité et permet ainsi d'augmenter la sécurité.

Selon un autre mode de réalisation, l'action est une demande de transfert desdites données de l'application dans une seconde zone mémoire du module de sécurité. Les données ainsi sauvegardées peuvent ainsi être réutilisées par le module de sécurité, par exemple être réinstallées suite à la mise à jour de l'application. La non communication de données à un équipement extérieur au module de sécurité permet encore d'augmenter la sécurité.

Selon un mode de réalisation particulier, le procédé comporte en outre une étape de réception d'un ordre de mise à jour de l'application dans une troisième zone mémoire sécurisée et une étape de réception d'un ordre de transfert desdites données de la deuxième zone mémoire vers la troisième zone mémoire sécurisée.

Ainsi, la mise à jour d'une application, par exemple la mise en place d'une nouvelle version du programme de l'application, ne nécessite plus d'accès à un fournisseur de services pour l'installation des données applicatives. De plus, les données applicatives réinstallées sont les données applicatives dont disposait l'inventeur avant la mise à jour, et non les données applicatives initiales. Ainsi, la mise à jour d'une application s'effectue de façon transparente pour l'utilisateur et ne nécessite pas la reconfiguration de ces données.

Selon un mode de réalisation particulier le procédé comporte l'accès à des données liées à une application installée sur un module de sécurité associé à un terminal mobile caractérisé en ce qu'il comporte :
- une étape de transmission d'un message contenant une demande d'accès à des données sécurisées du module de sécurité, au moins une partie dudit message étant chiffré avec une première clé de gestion,
- une étape de réception desdites données chiffrées avec une deuxième clé de gestion associée à la première clé,
- une étape d'obtention desdites données par déchiffrement au moyen de la première clé.

Ainsi, un serveur de gestion apte à obtenir ces données peut les transférer vers un autre module de sécurité sans nécessiter l'accès à un fournisseur de services. Les données obtenues peuvent être également être sauvegardées par le serveur de gestion pour être ensuite retransférées vers le même module de sécurité, après, par exemple, une mise à jour de l'application liée aux données.

Selon une caractéristique particulière, la demande d'accès comporte un ordre d'action, ladite action étant une demande de blocage de l'application et/ou une demande d'effacement de données de l'application.

Selon une autre caractéristique particulière, le procédé comporte en outre une étape de transmission sécurisée desdites données dans un deuxième module de sécurité.

Un autre mode de réalisation concerne également un procédé de demande de transfert de données liées à une application installée sur un module de sécurité associé à un terminal mobile, les données étant stockées dans une première zone mémoire sécurisée du module de sécurité, caractérisé en ce qu'il comporte :
- une étape de transmission d'un message contenant une demande de transfert desdites données de ladite application dans une deuxième zone mémoire du module de sécurité, au moins une partie dudit message étant chiffré avec une première clé de gestion,
- une étape de transmission d'une mise à jour de ladite application dans une troisième zone mémoire sécurisée,
- une étape de transmission d'une demande de transfert desdites données de la deuxième zone mémoire vers ladite troisième zone mémoire sécurisée.

Ainsi, la mise à jour ne nécessite pas d'accéder au serveur du fournisseur de services et est effectuée de façon transparente pour l'utilisateur.

Un autre mode de réalisation se rapporte également à un module de sécurité associé à un terminal mobile, comprenant des moyens de réception d'un message contenant une demande d'accès à des données liées à une application installée sur le module de sécurité, les données étant stockées dans une première zone mémoire sécurisée du module de sécurité, ledit message étant chiffré avec une première clé de gestion, des moyens d'obtention de ladite demande par déchiffrement du message au moyen d'une deuxième clé de gestion associée à la première clé de gestion, des moyens de lecture desdites données, des moyens de chiffrement des données lues avec la deuxième clé de gestion, des moyens de transmission des données chiffrées et au moins une deuxième zone mémoire apte à stocker les données chiffrées.

L'invention se rapporte enfin à un produit programme d'ordinateur selon la revendication 9.

D'autres particularités et avantages de la présente invention apparaitront dans la description suivante de modes de réalisation donnés à titre d'exemple non limitatif, en référence aux dessins annexés, dans lesquels :
- la figure 1 est un schéma illustrant le contexte général de l'invention,
- la figure 2 est un organigramme illustrant les différentes étapes d'un procédé d'accès et d'un procédé de transfert de données selon l'invention,
- la figure 3 est un schéma illustrant un système de transfert de données d'un premier module de sécurité vers un deuxième module de sécurité selon un mode de réalisation de l'invention,
- la figure 4 est un schéma-bloc illustrant un premier module de sécurité apte à transmettre ou à stocker des données sécurisées, utilisé dans un système de transfert selon l'invention,
- la figure 5 est un schéma-bloc illustrant un deuxième module de sécurité apte à recevoir les données sécurisées provenant du premier module de sécurité, utilisé dans un système de transfert selon l'invention,
- la figure 6 est un organigramme illustrant les étapes d'un procédé de transfert de données et d'un procédé d'accès à des données sécurisées mises en oeuvre dans un système de transfert selon un mode de réalisation de l'invention,
- la figure 7 est un schéma illustrant un procédé de demande de transfert de données et un procédé d'accès aux données mis en oeuvre lors de la mise à jour d'une application, selon un mode de réalisation de l'invention,
- la figure 8 est un schéma bloc représentant un serveur de gestion apte à réaliser les étapes d'un procédé d'accès selon un mode de réalisation de l'invention,
- la figure 9 est un schéma bloc représentant un serveur de gestion apte à réaliser les étapes d'un procédé de demande de transfert selon un mode de réalisation de l'invention.

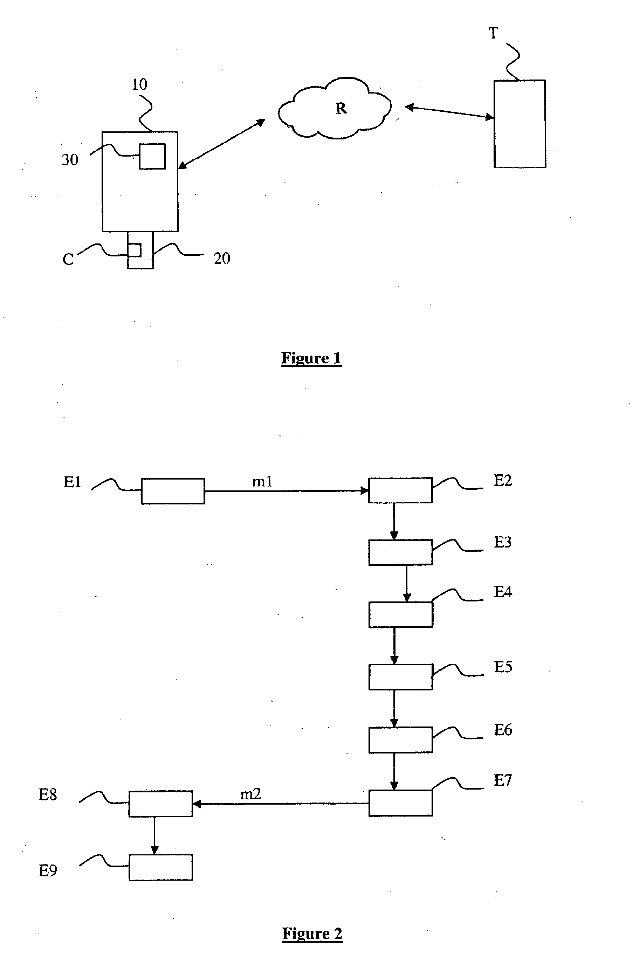

Un mode de réalisation d'un procédé de transfert de données et d'un procédé d'accès à ces données va maintenant être décrit en référence aux figures 1 et 2.

En référence à la figure 1, un utilisateur dispose d'un terminal mobile 10 qui est, par exemple un téléphone mobile ou un PDA (pour "Personal Digital Assistant").

Ce terminal mobile possède un module de communication 30, par exemple un module GSM, permettant une communication, via un réseau de communication R, avec des serveurs distants, par exemple avec un serveur de gestion T. Cette communication est par exemple une communication "OTA" (pour "Over The Air"), c'est-à-dire une communication sans fil classique. A titre d'alternative, le terminal mobile est relié au réseau R par une ligne téléphonique filaire.

Le terminal mobile 10 comporte également un module de sécurité 20.

Le module de sécurité 20 est par exemple un support amovible de type SIM ou UICC (pour "Universal Integrated Circuit Card"), une zone mémoire sécurisée du terminal mobile ou une carte à mémoire hébergeant un élément sécurisé (SD card, Embeded Secure controler ...)).

Le module 20 comporte des données confidentielles C enregistrées dans une zone mémoire, qui est une première zone mémoire sécurisée. Ces données confidentielles sont, par exemple, des données protégées en lecture par une clé partagée par le serveur de gestion T et le module de sécurité 20.

De façon classique, une clé partagée est soit une même clé connue des deux entités, soit une paire de clés associées. Un exemple de clés associées est un couple de clés dont l'une est secrète et n'est connue que d'une seule entité et l'autre publique utilisée par l'autre entité.

En référence à la figure 2, les différentes étapes d'un procédé de transfert de données et d'un procédé d'accès à ces données selon un mode de réalisation de l'invention vont maintenant être décrites.

Lors d'une étape préalable (non représentée), une première clé de gestion KP1 a été enregistrée dans le serveur de gestion T et une deuxième clé de gestion KS1, associée à la première clé de gestion, a été enregistrée dans le premier module de sécurité 20.

Lors d'une première étape E1, le serveur de gestion T transmet au module de sécurité un message m1 contenant une demande d'accès DA aux données confidentielles C. Le message m1 est chiffré par le serveur T avec la première clé de gestion KP1.

Ce message est reçu par le module de sécurité 20 lors d'une étape E2.

Lors de l'étape suivante E3, le module de sécurité 20 déchiffre le message m1 reçu en utilisant la deuxième clé de gestion KSI et obtient la demande d'accès DA.

Lors de l'étape suivante E4, le module de sécurité 20 analyse cette demande d'accès DA et détermine que cette demande est un ordre de lecture sécurisé des données confidentielles C.

L'étape E4 est suivie d'une étape E5 lors de laquelle le module de sécurité récupère ces données C par lecture de la première zone mémoire sécurisée du module de sécurité 20.

Lors de l'étape E6 suivante, le module de sécurité 20 chiffre les données lues C à l'aide de la clé KS1 et transmet, lors d'une étape E7, un message m2 contenant les données chiffrées au serveur de gestion T, via le terminal mobile 10 et le réseau R.

Le serveur de gestion T reçoit le message m2 lors d'une étape E8 et à l'aide de la clé KP1 déchiffre les données contenues dans ce message et obtient ainsi les données confidentielles C (étape E9). Les données obtenues sont soit stockées dans une mémoire du serveur T, soit transférées à un autre module de sécurité.

A titre d'alternative, les étapes E7 à E9 sont remplacées par une étape au cours de laquelle le module de sécurité 20 enregistre les données chiffrées dans une seconde zone mémoire du module de sécurité.

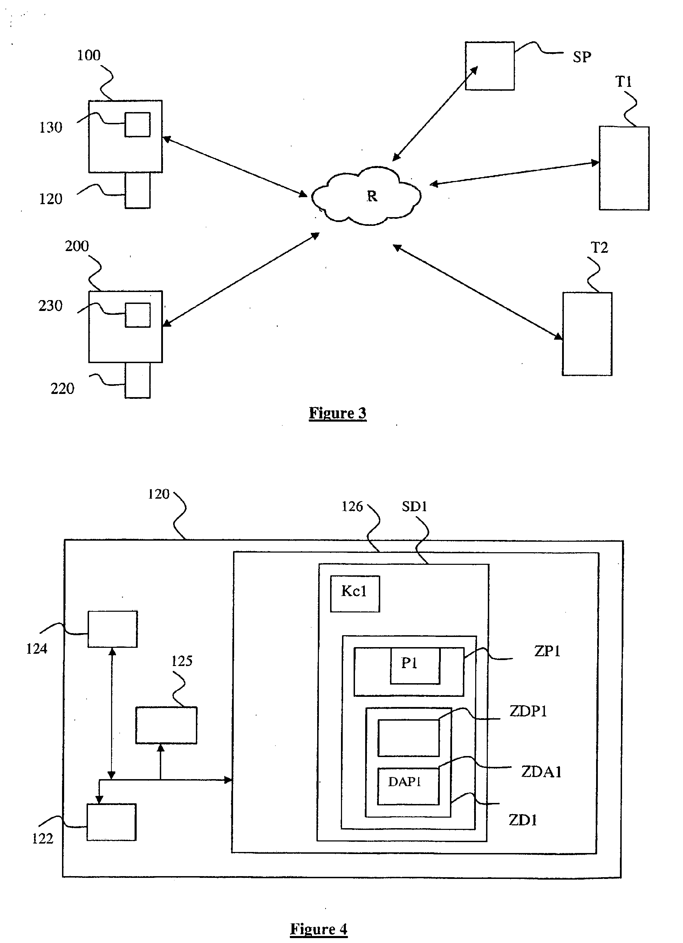

Un mode de réalisation particulier d'un procédé de transfert de données et d'un procédé d'accès à ces données, dans lequel les données sécurisées sont transférées d'un premier module de sécurité vers un second module de sécurité, va maintenant être décrit en référence aux figures 3 à 5.

En référence à la figure 3, un utilisateur dispose d'un premier terminal mobile 100 qui est, par exemple, un téléphone mobile ou un PDA (pour "Personal Digital Assistant").

Ce terminal mobile possède un module de communication 130, par exemple un module GSM, permettant une communication, via un réseau de communication R, avec des serveurs distants, par exemple avec un premier serveur de gestion T1. Cette communication est par exemple une communication "OTA" (pour "Over The Air"), c'est-à-dire une communication sans fil classique.

Le terminal mobile 100 comporte également un premier module de sécurité 120.

Le premier serveur de gestion T1, par exemple un serveur d'un fournisseur de services, permet de gérer une ou plusieurs applications installées sur le premier module de sécurité 120. Ce serveur T1 est notamment en charge du téléchargement sur le premier module de sécurité 120 des applications qu'il gère.

Cet utilisateur dispose également d'un deuxième terminal mobile 200 qui est, par exemple un téléphone mobile ou un PDA (pour "Personal Digital Assistant").

Ce terminal mobile 200 possède un module de communication 230, par exemple un module GSM. permettant une communication, via le réseau de communication R, avec des serveurs distants, par exemple avec un deuxième serveur de gestion T2. Cette communication est par exemple une communication "OTA" (pour "Over The Air"), c'est-à-dire une communication sans fil classique.

Le terminal mobile 200 comporte également un module sécurisé 220, qui est un deuxième module de sécurité.

Le deuxième serveur de gestion T2 permet de gérer une ou plusieurs applications installées sur le deuxième module de sécurité 220.

Dans ce mode de réalisation, les modules de sécurité 120 et 220 sont des cartes à mémoire amovibles compatibles avec les spécifications de GlobalPlatform (GlobalPlatform Card Spécification - version 2.1.1 de mars 2006).

En référence à la figure 4, un mode de réalisation du module de sécurité 120, qui est un module de sécurité apte à transmettre des données sécurisées va maintenant être décrit.

Le module de sécurité 120 comprend notamment un microprocesseur 122, un module d'émission-réception 124, une ou plusieurs mémoires 125 de type RAM et une ou plusieurs mémoires 126 de type ROM ou EEPROM dans laquelle sont enregistrés des programmes pouvant être exécutés par le microprocesseur 122.

Conformément aux spécifications de GlobalPlatform, un domaine de sécurité SD1 a été défini dans le module de sécurité 120. Ce domaine de sécurité est une zone mémoire 126 du module de sécurité protégée par une clé K1c partagée avec le serveur de gestion T1. La clé K1c est par exemple une clé, dite clé diversifiée, déterminée par le serveur de gestion T1 à partir d'une clé maître K1 connue uniquement du serveur de gestion T1.

A titre d'alternative, le module de sécurité 120 peut contenir plusieurs domaines de sécurité, chaque domaine étant protégé par une clé transmise par un serveur de gestion.

Une application, par exemple une application de paiement AP1, a été installée par le premier serveur de gestion T1 sur le premier module de sécurité 120, associé au terminal mobile 100.

Le téléchargement de cette application comporte de façon classique trois phases : le téléchargement du programme P1 de l'application, l'instanciation et la personnalisation.

Le téléchargement du programme P1 de l'application AP1 est effectué soit dans une zone ZP1 du domaine de sécurité SD1, soit dans une zone mémoire du module de sécurité commune à tous les domaines de sécurité du module de sécurité 120.

L'instanciation de l'application AP1 dans le domaine de sécurité SD1 consiste à réserver une zone mémoire ZD1 pour l'application AP1 dans le domaine de sécurité SD1 et à inscrire des données dans cette zone réservée. Plus précisément, la zone ZD1 contient une zone ZDP1 de données associées au programme P1 et une zone ZDA1 de données applicatives DAP1 de l'application AP1. Les données associées au programme P1 sont inscrites lors de l'instanciation dans la zone ZDP1.

La zone ZDA1 de données applicatives contient des données mises à jour au cours de la vie de l'application. Ces données représentent, par exemple, les choix de configuration de l'application effectués par l'utilisateur ou la liste des transactions réalisées. La zone ZDA1 de données applicatives peut également contenir des clés applicatives, c'est-à-dire des clés nécessaires au fonctionnement de l'application. Les données applicatives sont initialisées dans le module de sécurité, lors de la phase de personnalisation.

La zone ZD1 n'est pas accessible en lecture par utilisation d'un ordre classique de lecture de données car elle est confidentielle. Seul, le programme P1 de l'application AP1 a accès à cette zone pour ses besoins propres.

L'utilisateur souhaite maintenant que cette application AP1 soit transférée sur le deuxième module de sécurité 220. Il souhaite notamment que la zone ZDA1 de données applicatives de l'application AP1 soit transférée de façon à retrouver ses choix de configuration lors de l'utilisation de l'application AP1 à partir d'un terminal associé au deuxième module de sécurité 220.

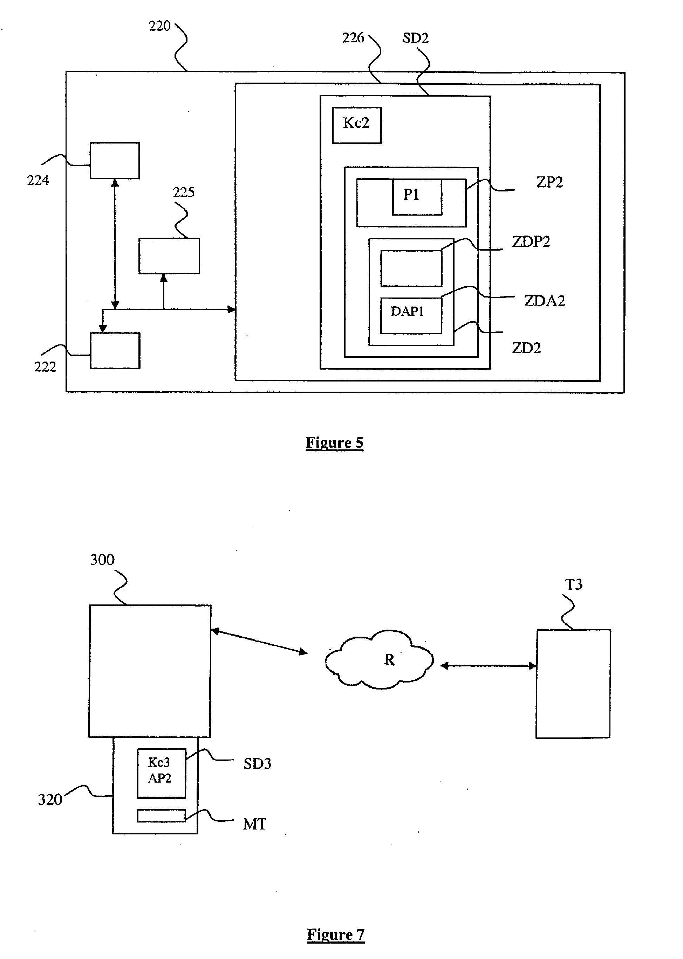

Un mode de réalisation d'un second module de sécurité 220, qui est un module de sécurité apte à recevoir les données sécurisées provenant d'un premier module de sécurité va maintenant être décrit en référence à la figure 5.

Le module de sécurité 220 comprend notamment un microprocesseur 222, un module d'émission-réception 224, une ou plusieurs mémoires 225 de type RAM et une ou plusieurs mémoires 226 de type ROM ou EEPROM dans laquelle sont enregistrés des programmes pouvant être exécutés par le microprocesseur 222.

Le deuxième module de sécurité 220 contient un domaine de sécurité SD2, conforme aux spécifications Global Platform. Ce domaine de sécurité est une zone mémoire 226 du module de sécurité 220. Ce domaine de sécurité SD2 contient une clé de chiffrement K2c partagée avec le deuxième serveur de gestion T2. La clé K2c est par exemple une clé déterminée par le serveur de gestion T2 à partir d'une clé maître K2 connue uniquement du serveur de gestion T2.

Lors d'une étape préalable, l'application AP1 a été téléchargée dans le module de sécurité SD2. Plus précisément, le programme P1 de l'application AP1 a été téléchargé dans une zone ZP2 du module de sécurité SD2 et une zone ZD2 de données a été réservée dans le domaine de sécurité SD2. De plus, la zone ZDP1 de données liées à l'application AP1 a été téléchargée dans une zone ZDP2 de la zone ZD2.

Les différentes étapes d'un mode de réalisation d'un procédé de transfert de données et d'un procédé d'accès à ces données vont maintenant être décrites en référence à la figure 6.

Lors d'une première étape E10, le premier serveur de gestion T1 établit un canal de communication sécurisé avec le domaine de sécurité SD1. L'établissement d'un tel canal consiste pour le premier serveur de gestion T1 à sélectionner le domaine de sécurité en utilisant un identifiant de ce domaine de sécurité.

Suite à l'établissement de ce canal, le serveur de gestion T1 transmet au premier module de sécurité 120, lors d'une étape E11, un message m10 contenant une demande d'accès DA aux données applicatives DAP1 de l'application AP1, stockées dans le domaine de sécurité SD1. Plus précisément, la demande d'accès DA est une nouvelle commande dont le format est conforme aux spécifications GlobalPlatfonn. Cette commande définit, sur un ou plusieurs octets, l'action à réaliser par le module de sécurité 120.

Dans le mode de réalisation décrit, la demande d'accès DA est de la forme d'une commande normalisée APDU (pour "Application Protocol Data Unit") classique : CLA-INS-P1-P2-Lc-Data-Le. La signification générale de chaque paramètre CLA, INS, P1, P2, Lc, Data et Le sont définies dans les spécifications ISO 7816-4.

Plus précisément, pour cette nouvelle commande DA, le paramètre INS est, par exemple, une valeur indiquant que l'ordre à réaliser par le module de sécurité est un ordre de lecture sécurisée, les paramètres P1 et P2 sont, par exemple, des paramètres précisant des options de l'ordre INS, par exemple lecture avec ou sans blocage de l'application, lecture avec ou sans effacement des données...et le paramètre Data contient, par exemple, un identifiant de l'application AP1.

Le message m10 contient un identifiant du domaine de sécurité SD1 et la demande d'accès DA chiffrée par le premier serveur T1 avec la première clé de chiffrement K1c.

En alternative, seule une partie de la demande d'accès DA est chiffrée.

Ce message m10 est reçu par le premier module de sécurité 120 lors d'une étape E12.

Lors de l'étape suivante E13, le premier module de sécurité déchiffre le message m10 en utilisant la clé de chiffrement K1c et obtient la demande d'accès DA.

Le déchiffrement permet au module de sécurité d'authentifier le serveur émetteur de la demande.

Lors de l'étape suivante E14, le module de sécurité 120 analyse cette demande d'accès et détermine que cette demande est un ordre de lecture sécurisée, par lecture de la valeur du paramètre INS. Il détermine également que la zone demandée est la zone de données applicatives de l'application AP1 dans le domaine SD1 par lecture de la zone Data contenue dans la commande DA.

L'étape E14 est suivie d'une étape E15 lors de laquelle le premier module de sécurité 120 récupère ces données par lecture de la zone ZDA1 de données applicatives DAP1 de l'application AP1 stockée dans le domaine de sécurité SD1. La zone ZDA1 représente une première zone mémoire sécurisée.

Lors de l'étape E16 suivante, le premier module de sécurité 120 chiffre les données lues à l'étape E15, avec la clé K1c et transmet, lors d'une étape E17, un message m20 contenant les données chiffrées obtenues, au premier serveur de gestion T1, via le premier terminal mobile 100 et le réseau de communication R.

Le serveur de gestion T1 reçoit le message m20 lors d'une étape E18 et à l'aide de la clé K1c déchiffre ce contenu et obtient ainsi le contenu DAP1 de la zone de données applicatives ZDA1 de l'application AP1 stockée dans le domaine de sécurité SD1 (étape E19).

L'étape E19 est suivie d'une étape E20 lors de laquelle le module de sécurité commande le blocage de l'application AP1. Pour cela, il modifie un registre Global Platform du module de sécurité (passage à l'état "locked"). Ainsi, l'application AP1 ne répond plus aux demandes de sélection provenant d'équipements extérieurs.

La modification de ce registre correspond à l'exécution d'une commande classique Set Status définie dans les spécifications Global Platform transmise par un serveur de gestion.

A titre d'alternative, l'étape E20 n'est pas une étape de blocage de l'application mais une étape d'effacement des données de l'application. Par exemple, toutes les données de la zone ZD1 et/ou de la zone ZP1 sont mises à la valeur 0 empêchant ainsi toute exécution de l'application AP1.

Encore à titre d'alternative, aucune action n'est réalisée lors de l'étape E20.

Dans le mode de réalisation décrit ici, l'action à réaliser lors de l'étape E20 est déterminée par le contenu des paramètres P1 et/ou P2 de la demande d'accès DA.

Par exemple, le paramètre P1 est un octet de la forme 'b8 b7 b6 b5 b4 b3 b2 bl' dans lequel le bit B5=1 indique que l'action à réaliser est un effacement des données et le bit b6 =1 indique que le module de sécurité doit commander le blocage de l'application.

Dans une variante du mode de réalisation, suite au transfert des données vers le premier serveur de gestion T1 (étape E17), le module de sécurité 120 transmet une information à un serveur SP, qui est par exemple un serveur de l'opérateur ou de l'émetteur du module de sécurité, pour l'informer du transfert de données applicatives afin que celui-ci garde un historique des transferts réalisés pour assurer un service en cas de conflit et ainsi augmenter la sécurité du système.

L'étape E20 est suivie d'une étape E21 lors de laquelle 1e premier serveur de gestion T1 établit alors un canal sécurisé avec le deuxième serveur de gestion T2. Ce canal peut être établi de façon classique par l'échange de clés partagées entre les deux serveurs.

Suite à l'établissement de ce canal sécurisé, le premier serveur T1 transmet, au deuxième serveur de gestion T2, un message m30 chiffré contenant les données applicatives DAP1 de l'application AP1, lors d'une étape E22.

Lors de l'étape E23 suivante, le deuxième serveur de gestion T2 reçoit ces données et prépare une commande de personnalisation de l'application AP1 dans le domaine de sécurité SD2.

Dans le mode de réalisation décrit ici, cette demande est constituée d'un ordre "Install for perso" et d'un ou plusieurs ordres "Store Data " contenant les données applicatives DAP1 de l'application AP1 transmises par le serveur T1. Les ordres "Install for perso" et Store Data" sont définis dans les spécifications Global Platform.

A titre d'alternative, les données applicatives sont elles aussi chiffrées avec la clé Kc2.

Ces ordres sont ensuite transmis chiffrés avec la clé de gestion Kc2 du domaine de sécurité SD2 en plusieurs messages m40 au deuxième module de sécurité 220, lors d'une étape E24.

Lors de l'étape E25 suivante, le deuxième module de sécurité 220, après réception de ces ordres, les déchiffre et commande l'écriture des données applicatives DAP1 de l'application AP1 dans la zone réservée ZD2 pour l'application AP1 dans le domaine de sécurité SD2 du deuxième module de sécurité. Plus précisément, ces données sont enregistrées dans la zone ZDA2 de données applicatives de l'application AP1 du domaine de sécurité SD2.

Lors de l'étape E26 suivante, le deuxième module de sécurité 220 renvoie un message d'acquittement m50 au deuxième serveur de gestion T2. Dans le mode de réalisation décrit, ce message est un ordre d'acquittement (Proof of Receipt) conforme à la nonne Global Platform.

Le deuxième serveur de gestion T2 transmet ce message de notification m50 au premier serveur T1 lors d'une étape E27.

Dans un mode de réalisation où aucune action n'a été effectuée lors de l'étape E20, le premier serveur T1 peut alors commander, lors d'une étape E28, une action de blocage et/ou d'effacement de données, au premier module de sécurité 120, suite à la réception du message m50. Pour cela, il transmet au module de sécurité 120 une commande classique de blocage (commande Set Status spécifiée dans Global Platform) de l'application AP1 et/ou une commande classique d'effacement (commande Delete spécifiée dans Global Platform) des données applicatives liées à l'application contenues dans le domaine de sécurité SD1 du module de sécurité 120 et/ou un ordre d'effacement de la zone de données ZD1 et de la zone programme ZP1 de l'application AP1.

Ainsi, l'utilisateur du premier module de sécurité ne peut plus utiliser l'application AP1 à partir de ce premier module de sécurité.

Le premier serveur T1 peut également envoyer un message d'information au fournisseur de services, par exemple la banque, pour l'informer que l'application AP1 n'est plus accessible dans le premier module de sécurité 120.

Dans le mode de réalisation décrit, le téléchargement de l'application AP1 dans le domaine de sécurité SD2 du module de sécurité 220 est réalisé avant la récupération des données dans le premier module de sécurité 120. A titre d'alternative, ce téléchargement peut être effectué juste avant la transmission des données applicatives au module de sécurité 220, c'est-à-dire après l'étape E21.

Dans le mode de réalisation décrit, les données applicatives d'une application sont transférées d'un premier serveur de gestion T1 vers un deuxième serveur de gestion T2. L'invention s'applique également au cas où un même serveur de gestion gère les deux modules de sécurité 120 et 220. Dans ce cas, l'étape E21 d'établissement de canal sécurisé et l'étape E22 de transfert d'un premier serveur au deuxième serveur ne sont pas réalisées.

L'invention s'applique également au cas où l'utilisateur dispose d'un seul terminal mobile et de deux modules de sécurité. L'utilisateur doit alors insérer le premier module de sécurité dans le terminal pour la phase de lecture des données. Il doit ensuite remplacer ce premier module dans le terminal mobile par le deuxième module. Enfin, si l'étape de blocage de l'application n'a pas été réalisée lors de la phase de lecture, il doit réinsérer de nouveau le premier module.

Un mode de réalisation d'un procédé de demande de transfert de données et du procédé d'accès à ces données va maintenant être décrit.

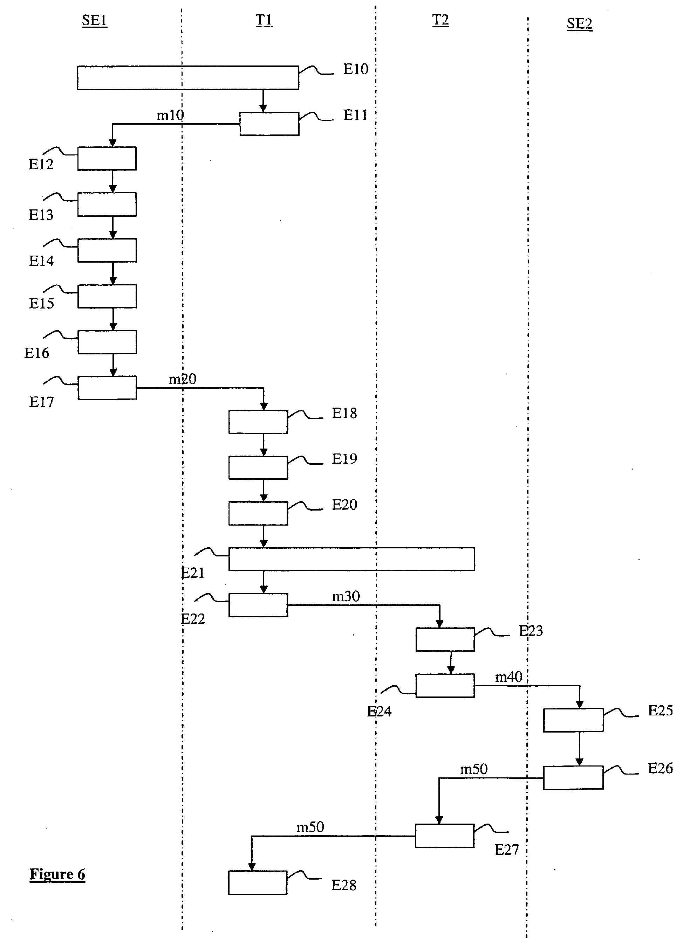

En référence à la figure 7, un utilisateur dispose d'un terminal mobile 300 associé à un module de sécurité 320.

Le terminal mobile 300 possède également un module de communication 330 permettant une communication, via un réseau de communication R, avec des serveurs distants, par exemple avec un serveur de gestion T3.

Le module de sécurité 320 est une carte à mémoire compatible avec les spécifications Global Platform. Ce module de sécurité est similaire au module de sécurité 120, décrit précédemment en référence à la figure 4.

Un domaine de sécurité SD3 a été défini dans ce module de sécurité. Une clé de chiffrement Kc3 a été définie et enregistrée pour ce domaine de sécurité SD3 dans le module de sécurité 320 par le serveur de gestion T3.

Une application AP2 a été installée dans ce module de sécurité. Plus précisément, le programme P3 de l'application AP2 est enregistré dans une zone ZP3 du domaine de sécurité SD3 et une zone ZD3 du domaine de sécurité SD3 est réservée pour cette application. Les données applicatives DAP3 liées à l'application AP2 ont été enregistrées dans une zone ZDA3 de la zone ZD3. La zone ZDA3 représente une première zone mémoire sécurisée.

Le fournisseur de services associé à l'application AP2 souhaite effectuer une mise à jour de l'application AP2 et transmet au serveur de gestion T3 un nouveau programme P4 de l'application AP2.

Le serveur de gestion T3 transmet alors au module de sécurité 320, une demande d'accès aux données applicatives de l'application AP2 stockées dans le domaine de sécurité SD3. Cette demande d'accès est chiffrée avec la clé Kc3.

Cette demande d'accès contient une information, qui représente un ordre d'action, indiquant au module de sécurité que les données applicatives doivent être stockées temporairement dans une deuxième zone mémoire du module de sécurité, par le module de sécurité.

Dans le mode de réalisation décrit ici, la demande de transfert est une nouvelle commande dont le format est conforme aux spécifications GlobalPlatform. Cette commande définit, sur un ou plusieurs octets, l'action à réaliser par le module de sécurité 320.

La demande de transfert est de la forme : CLA-INS-P1-P2-Lc-Data-Le avec :
- INS un paramètre indiquant que l'ordre à réaliser par le module de sécurité est un ordre de transfert,
- P1 et P2 sont des paramètres précisant des options de l'ordre INS, par exemple P1 et/ou P2 indique que les données doivent être transférées d'une application vers une mémoire temporaire.
- Data contient un identifiant de l'application AP2.

Le module de sécurité reçoit ce message et le déchiffre. Il accède ensuite aux données applicatives demandées par lecture de la zone ZDA3, chiffre les données lues avec la clé Kc3 et stocke les données lues et chiffrées dans une mémoire temporaire MT du module de sécurité. La zone MT est une seconde zone mémoire du module de sécurité 320.

Le module de sécurité 320 transmet ensuite un message d'acquittement au serveur de gestion T3.

Le serveur de gestion T3 commande ensuite l'installation de la nouvelle version de l'application dans le domaine de sécurité SD3 du module de sécurité 320. Cette installation consiste à charger la nouvelle version P4 du programme de l'application, à l'instancier et à l'activer.

Dans le mode de réalisation décrit, ces actions correspondent aux commandes "Install For Load", "Load", "Install for Install" et "Install for Make Selectable" spécifiées dans Global Platform.

La transmission de ce nouveau programme entraine, de façon connue, l'effacement des zones ZP3 et ZD3 dans le domaine de sécurité SD3 et la création de nouvelles zones ZP4 et ZD4 dans le domaine de sécurité SD3, équivalentes aux zones ZP3 et ZD3.

Dans un mode de réalisation particulier, les zones ZP3 et ZP4 d'une part, et les zones ZD3 et ZD4 d'autre part, sont les mêmes zones. Dans ce cas, la première zone mémoire sécurisée et la troisième zone mémoire sécurisée sont les mêmes.

Le nouveau programme P4 est enregistré dans la zone ZP4.

Suite à l'installation de cette nouvelle version P4, le module de sécurité envoie un message d'acquittement au serveur de gestion T3.

Le serveur de gestion T3 transmet ensuite au module de sécurité 320 un message contenant une demande de transfert des données applicatives de la seconde zone mémoire vers la zone ZDA4 de données applicatives ZDA4 de l'application AP2 dans le domaine de sécurité SD3. La zone ZDA4 est incluse dans la zone ZD4 et représente une troisième zone mémoire sécurisée.

Dans le mode de réalisation décrit ici, la demande de transfert est une nouvelle commande dont le format est conforme aux spécifications GlobalPlatform. Cette commande définit, sur un ou plusieurs octets, l'action à réaliser par le module de sécurité 320.

La demande de transfert est de la forme : CLA-INS-P1-P2-Lc-Data-Le avec :
- INS un paramètre indiquant que l'ordre à réaliser par le module de sécurité est un ordre de transfert,
- P1 et P2 sont des paramètres précisant des options de l'ordre INS, par exemple P1 et/ou P2 indique que les données doivent être transférées d'une mémoire temporaire vers une application.
- Data contient un identifiant de l'application AP2.

A titre d'alternative, la demande de transfert des données de la deuxième zone MT - vers la zone de données applicatives de l'application AP2, c'est-à-dire la troisième zone mémoire sécurisée, est un ordre "Install for Perso" spécifié dans les spécifications Global Platform dans lequel un paramètre, par exemple P1 ou P2, est modifié pour indiquer que les données applicatives à transférer sont enregistrées dans une deuxième zone mémoire du module sécurisé.

Suite à la réception de cette commande, le module de sécurité déchiffre avec la clé Kc3 les données enregistrées dans la seconde zone mémoire MT et les inscrit dans la zone ZDA4 réservée aux données applicatives de l'application AP2 dans le domaine de sécurité SD3 du module de sécurité 320.

Ainsi le module de sécurité SD3 réalise les étapes de réception d'un message contenant une demande d'accès aux données applicatives de l'application AP2, enregistrées dans une première zone sécurisée du module de sécurité, le message étant chiffré avec une première clé de gestion, d'obtention de la demande d'accès par déchiffrement du message au moyen d'une deuxième clé de gestion associée à la première clé de gestion, de lecture des données applicatives de l'application AP2, de chiffrement des données lues et de stockage des données lues et chiffrées dans une seconde zone mémoire du module de sécurité.

Le serveur de gestion T3 réalise les étapes de transmission d'un message contenant une demande de transfert dans une deuxième zone mémoire du module de sécurité des données applicatives de l'application AP2, enregistrées dans une première zone sécurisée du module de sécurité, le message étant chiffré avec une première clé de gestion, de transmission d'une mise à jour de l'application AP2 dans une troisième zone mémoire sécurisée et de transmission d'une demande de transfert des données enregistrées dans la seconde zone mémoire vers la troisième zone mémoire sécurisée.

Dans une variante de ce mode de réalisation, les données lues dans la première zone mémoire sécurisée du domaine de sécurité du terminal mobile sont transmises au serveur de gestion qui les enregistre et les transfère de nouveau vers le module de sécurité lorsque l'application a été mise à jour.

Dans une autre variante de ce mode de réalisation, la nouvelle version P4 du programme est installée dans de nouvelles zones ZP4 et ZD4 du domaine de sécurité SD3 alors que la version P3 de l'application AP2 est toujours active dans les zones ZP3 et ZD3. Le transfert des données applicatives de la zone SD3 vers la zone SD4 est alors réalisé par une seule demande de transfert. Cette demande de transfert est un ordre de transfert d'une première zone mémoire sécurisée vers une troisième zone mémoire sécurisée. Elle contient un identifiant de la première zone mémoire et un identifiant de la troisième zone mémoire. Dans cette variante, les données lues dans la zone SD3 sont réinscrites directement dans la zone SD4.

Selon un mode de réalisation choisi et représenté à la figure 7, un serveur de gestion mettant en oeuvre un procédé d'accès selon l'invention est par exemple un micro-ordinateur 500 qui comporte de façon connue, notamment une unité de traitement 502 équipée d'un microprocesseur, une mémoire morte de type ROM ou EEPROM 503, une mémoire vive de type RAM 504 et une interface de communication 505 avec un réseau R.

Le micro-ordinateur 500 peut comporter de manière classique et non exhaustive les éléments suivants: un clavier, un écran, un microphone, un haut-parleur, un lecteur de disque, un moyen de stockage...

Ce serveur 500 comprend un module ME1 d'émission de données vers un réseau de communication, une module MR1 de réception de données en provenance du réseau de communication, un module MC1 de construction de message et un module MD1 de chiffrement et déchiffrement.

Une première clé de gestion est enregistrée dans la mémoire morte 503.

Le module MC1 de construction de message est apte à préparer un message contenant une demande d'accès à des données sécurisées d'un module de sécurité. Le module MD1 de chiffrement/déchiffrement est apte à chiffrer au moins une partie du message préparé par le module MC1, avec la première clé de gestion enregistrée dans la mémoire morte 503.

Le module ME1 de transmission est apte à transmettre le message préparé et chiffré.

Le module MR1 de réception est apte à recevoir des données chiffrées avec une deuxième clé de gestion associée à la première clé de gestion et à les transmettre au module MD1 de chiffrement/déchiffrement.

Le module MD1 de chiffrement/déchiffrement est apte à déchiffrer les données chiffrées reçues au moyen de la première clé de gestion et à obtenir ainsi les données demandées.

Le module MD1 de chiffrement/déchiffrement est également apte à chiffrer ces données avec une clé partagée avec une seconde entité, par exemple un second serveur ou un second module de sécurité et le module ME1 de transmission est apte à transmettre ces données chiffrées au second serveur ou au second module de sécurité.

La mémoire morte 503 comporte des registres mémorisant un programme d'ordinateur PG1 comportant des instructions de programme adaptées à mettre en oeuvre un procédé d'accès selon l'invention tel que décrit précédemment.

Ce programme PG1 est ainsi adapté à transmettre un message contenant une demande d'accès à des données sécurisées du module de sécurité, au moins une partie dudit message étant chiffré avec une première clé de gestion, à recevoir des données chiffrées avec une deuxième clé de gestion associée à la première clé et à obtenir les données demandées par déchiffrement au moyen de la première clé.

Les données obtenues sont soient stockées dans une mémoire temporaire, soit transférées de façon sécurisée, via le réseau R, à un autre module de sécurité.

Lors de la mise sous tension, le programme PG1 stocké dans la mémoire morte 503 est transféré dans la mémoire vive qui contiendra alors le code exécutable du procédé d'affichage de l'invention ainsi que des registres pour mémoriser les variables nécessaires à la mise en oeuvre de l'invention.

De manière plus générale un moyen de stockage, lisible par un ordinateur ou par un microprocesseur, intégré ou non au dispositif, éventuellement amovible, mémorise un programme mettant en oeuvre le procédé d'accès à des données selon l'invention.

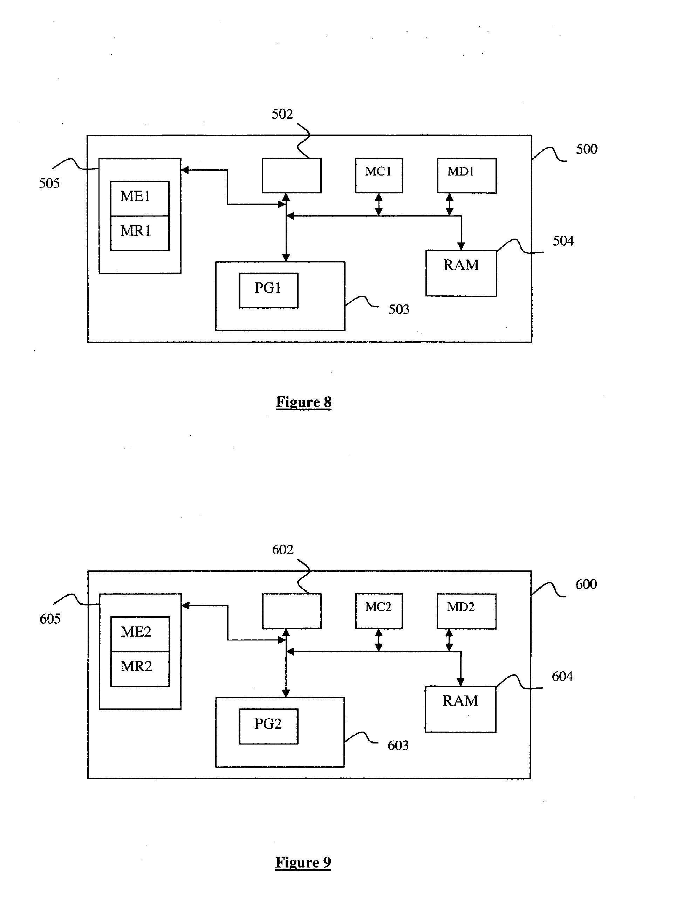

Selon un mode de réalisation choisi et représenté à la figure 8, un serveur de gestion mettant en oeuvre un procédé de demande de transfert selon l'invention est par exemple un ordinateur de type PC 600 qui comporte de façon connue, notamment une unité de traitement 602 équipée d'un microprocesseur, une mémoire morte de type ROM 603, une mémoire vive de type RAM 604. Le terminal 600 peut comporter de manière classique et non exhaustive les éléments suivants: un clavier, un écran, un microphone, un haut-parleur, une interface de communication, un lecteur de disque, un moyen de stockage...

Ce serveur comprend un module ME2 d'émission de données vers un réseau de communication, une module MR2 de réception de données en provenance du réseau de communication, un module MC2 de construction de message et un module MD2 de chiffrement et déchiffrement.

Une première clé de gestion est enregistrée dans la mémoire 603.

Le module MC2 de construction de message est apte à préparer un message contenant une demande de transfert de données liées à une application, stockées dans une première zone mémoire sécurisée d'un module de sécurité, dans une deuxième zone mémoire du module de sécurité.

Le module MD2 de chiffrement/déchiffrement est apte à chiffrer au moins une partie du message préparé par le module MC2, avec la première clé de gestion enregistrée dans la mémoire morte 603.

Le module ME2 de transmission est apte à transmettre le message préparé et chiffré.

Le module ME2 de transmission est également apte à transmettre une mise à jour d'une application dans une troisième zone mémoire sécurisée et une demande de transfert de données sécurisées de la deuxième zone mémoire vers la troisième zone mémoire sécurisée.

La mémoire morte 603 comporte des registres mémorisant un programme d'ordinateur PG2 comportant des instructions de programme adaptées à mettre en oeuvre un procédé de demande de transfert selon l'invention tel que décrit précédemment.

Ce programme PG2 est ainsi adapté à transmettre un message contenant une demande d'accès à des données sécurisées du module de sécurité, au moins une partie dudit message étant chiffré avec une première clé de gestion, à transmettre une mise à jour de l'application dans une troisième zone mémoire sécurisée et à transmettre une demande de transfert des données de la deuxième zone mémoire vers la troisième zone mémoire sécurisée

Lors de la mise sous tension, le programme PG2 stocké dans la mémoire morte 603 est transféré dans la mémoire vive qui contiendra alors le code exécutable de l'invention ainsi que des registres pour mémoriser les variables nécessaires à la misé en oeuvre de l'invention.

De manière plus générale un moyen de stockage, lisible par un ordinateur ou par un microprocesseur, intégré ou non au dispositif, éventuellement amovible, mémorise un programme mettant en oeuvre le procédé de demande de transfert de données selon l'invention.

## Revendications

1. Procédé de gestion de données (DAP1) liées à une application (AP1,AP2) installée sur un module de sécurité (20,120,320) associé à un terminal mobile (10, 100,300), les données étant stockées dans une première zone mémoire sécurisée (C,ZDA1) du module de sécurité, **caractérisé en ce qu'**il comporte :
- une étape de réception (E2, E12) d'un message contenant une demande d'accès auxdites données de ladite application, au moins une partie dudit message étant chiffré avec une première clé de gestion (KS1,Kc1,Kc3),
- une étape d'obtention (E3, E13) de ladite demande par déchiffrement du message au moyen d'une deuxième clé de gestion (KP1,Kc1) associée à la première clé de gestion,
- une étape de lecture (E5,E15) desdites données de l'application,
- une étape de chiffrement (E6,E16) des données lues avec la deuxième clé de gestion,
- une étape de transfert dans une seconde zone mémoire sécurisée des données chiffrées.

2. Procédé de gestion selon la revendication 1 **caractérisé en ce que** la seconde zone mémoire est située dans ledit module de sécurité (320)

3. Procédé de gestion selon la revendication 1 **caractérisé en ce que** la seconde zone mémoire est située dans un autre module de sécurité (200)

4. Procédé de gestion selon la revendication 2 ou 3 **caractérisé en ce que** la demande d'accès comporte un ordre d'action et **en ce que** le procédé comporte une étape d'exécution (E20) de ladite action après l'étape de transmission ou de stockage.

5. Procédé de gestion selon la revendication 4 **caractérisé en ce que** l'action est un blocage de ladite application et/ou un effacement de données de ladite application.

6. Procédé de gestion selon la revendication 5 **caractérisé en ce qu'**il comporte en outre une étape de réception d'un ordre de mise à jour de l'application dans une troisième zone mémoire sécurisée et une étape de réception d'un ordre de transfert desdites données de la deuxième zone mémoire vers la troisième zone sécurisée.

7. Module de sécurité (10,120,320) associé à un terminal mobile, **caractérisé en ce qu'**il comprend :
- des moyens de réception d'un message contenant une demande d'accès à des données liées à une application installée sur le module de sécurité, les données étant stockées dans une première zone mémoire sécurisée du module de sécurité, ledit message étant chiffré avec une première clé de gestion,
- des moyens d'obtention de ladite demande par déchiffrement du message au moyen d'une deuxième clé de gestion associée à la première clé de gestion,
- des moyens de lecture desdites données,
- des moyens de chiffrement des données lues avec la deuxième clé de gestion,
- des moyens de transmission des données chiffrées dans une deuxième zone mémoire apte à stocker les données chiffrées.

8. Terminal **caractérisé en ce qu'**il comprend un module tel que défini dans la revendication 7.

9. Produit programme d'ordinateur comprenant des instructions pour mettre en oeuvre les étapes du procédé de gestion selon l'une des revendications 1 à 6, lorsqu'il est chargé et exécuté par un processeur.

## Patentansprüche

1. Verfahren für das Management von Daten (DAP1), die mit einer Anwendung (AP1, AP2) in Beziehung stehen, die in einem Sicherheitsmodul (20, 120, 320) installiert ist, das einem mobilen Endgerät (10, 100, 300) zugeordnet ist, wobei die Daten in einer ersten gesicherten Speicherzone (C, ZDA1) des Sicherheitsmoduls gespeichert sind, **dadurch gekennzeichnet, dass** es Folgendes umfasst:
- einen Schritt (E2, E12) des Empfangens einer Nachricht, die eine Anforderung für den Zugriff auf die Daten der Anwendung enthält, wobei wenigstens ein Teil der Nachricht mit einem ersten Management-Schlüssel (KS1, Kc1, Kc3) verschlüsselt ist,
- einen Schritt (E3, E13) zum Erhalten der Anforderung durch Entschlüsseln der Nachricht mittels eines zweiten Management-Schlüssels (KP1, Kc1), der dem ersten Management-Schlüssel zugeordnet ist,
- einen Schritt (E5, E15) zum Lesen der Daten der Anwendung,
- einen Schritt (E6, E16) zum Verschlüsseln der gelesenen Daten mit dem zweiten Management-Schlüssel,
- einen Schritt des Übertragens der verschlüsselten Daten in eine zweite gesicherte Speicherzone.

2. Management-Verfahren nach Anspruch 1, **dadurch gekennzeichnet, dass** sich die zweite Speicherzone in dem Sicherheitsmodul (320) befindet.

3. Management-Verfahren nach Anspruch 1, **dadurch gekennzeichnet, dass** sich die zweite Speicherzone in einem anderen Sicherheitsmodul (200) befindet.

4. Management-Verfahren nach Anspruch 2 oder 3, **dadurch gekennzeichnet, dass** die Zugriffsanforderung einen Aktionsbefehl enthält und dass das Verfahren einen Schritt (E20) zum Ausführen der Aktion nach dem Schritt des Übertragens oder Speicherns umfasst.

5. Management-Verfahren nach Anspruch 4, **dadurch gekennzeichnet, dass** die Aktion ein Sperren der Anwendung und/oder ein Löschen der Daten der Anwendung ist.

6. Management-Verfahren nach Anspruch 5, **dadurch gekennzeichnet, dass** es außerdem einen Schritt des Empfangens eines Befehls zum Aktualisieren der Anwendung in einer dritten gesicherten Speicherzone und einen Schritt des Empfangens eines Befehls zum Übertragen der Daten von der zweiten Speicherzone in die dritte Speicherzone umfasst.

7. Sicherheitsmodul (10, 120, 320), das einem mobilen Endgerät zugeordnet ist, **dadurch gekennzeichnet, dass** es Folgendes umfasst:
- Mittel zum Empfangen einer Nachricht, die eine Anforderung für den Zugriff auf Daten, die mit einer in dem Sicherheitsmodul installierten Anwendung in Beziehung stehen, enthält, wobei die Daten in einer ersten gesicherten Speicherzone des Sicherheitsmoduls gespeichert sind, wobei die Nachricht mit einem ersten Management-Schlüssel verschlüsselt ist,
- Mittel zum Erhalten der Anforderung durch Entschlüsseln der Nachricht mittels eines zweiten Management-Schlüssels, der dem ersten Management-Schlüssel zugeordnet ist,
- Mittel zum Lesen der Daten,
- Mittel zum Verschlüsseln der gelesenen Daten mit dem zweiten Management-Schlüssel,
- Mittel zum Übertragen der verschlüsselten Daten in eine zweite Speicherzone, die verschlüsselte Daten speichern kann.

8. Endgerät, **dadurch gekennzeichnet, dass** es ein Modul nach Anspruch 7 umfasst.

9. Computerprogrammprodukt, das Befehle enthält, um die Schritte des Management-Verfahrens nach einem der Ansprüche 1 bis 6 auszuführen, wenn es geladen und von einem Prozessor ausgeführt wird.

## Claims

1. Method for managing data (DAP1) linked to an application (AP1, AP2) installed on a security module (20,120,320) associated with a mobile terminal (10,100,300), the data being stored in a first secure memory area (C, ZDA1) of the security module, **characterized in that** it comprises:
- a step (E2,E12) for receiving a message containing a request to access said data of said application, at least a portion of said message being encrypted with a first management key (KS1,Kc1,Kc3),
- a step (E3,E13) for obtaining said request by decrypting the message by means of a second management key (KP1,Kc1) associated with the first management key,
- a step (E5,E15) for reading said application data,
- a step (E6,E16) for encrypting the data read with the second management key,
- a step for transferring the encrypted data into a second secure memory area.

2. Management method according to Claim 1, **characterized in that** the second memory area is situated in said security module (320).

3. Management method according to Claim 1, **characterized in that** the second memory area is situated in another security module (200).

4. Management method according to Claim 2 or 3, **characterized in that** the access request includes an action instruction and **in that** the method includes a step (E20) for executing said action after the transmission or storage step.

5. Management method according to Claim 4, **characterized in that** the action is a blocking of said application and/or a deleting of data of said application.

6. Management method according to Claim 5, **characterized in that** it also includes a step for receiving an instruction to update the application in a third secure memory area and a step for receiving an instruction to transfer said data from the second memory area to the third secure area.

7. Security module (10,120,320) associated with a mobile terminal, **characterized in that** it comprises:
- means for receiving a message containing a request to access data linked to an application installed on the security module, the data being stored in a first secure memory area of the security module, said message being encrypted with a first management key,
- means for obtaining said request by decryption of the message by means of a second management key associated with the first management key,
- means for reading said data,
- means for encrypting the data read with the second management key,
- means for transmitting the encrypted data into a second memory area able to store the encrypted data.

8. Terminal **characterized in that** it comprises a module as defined in Claim 7.

9. Computer program product comprising instructions for implementing the steps of the management method according to one of Claims 1 to 6, when it is loaded and run by a processor.
